# EUROPÄISCHE PATENTSCHRIFT

(11) **EP 4 392 696 B1**
(45) Veröffentlichungstag und Bekanntmachung des Hinweises auf die Patenterteilung: **06.05.2026**
(21) Anmeldenummer: 22743817.3
(22) Anmeldetag: 13.07.2022
(51) Int. Cl.: F16K 31/40

(54) **ELEKTROMAGNETISCH BETÄTIGBARES VENTIL MIT DICHTKÖRPER**
ELECTROMAGNETICALLY ACTUATABLE VALVE HAVING A SEALING BODY
SOUPAPE À ACTIONNEMENT ÉLECTROMAGNÉTIQUE POURVUE D'UN CORPS D'ÉTANCHÉITÉ

(30) Priorität: 25.08.2021 DE 102021122017
(43) Veröffentlichungstag der Anmeldung: 03.07.2024
(73) Patentinhaber: SVM Schultz Verwaltungs-GmbH & Co. KG, 87700 Memmingen (DE)
(72) Erfinder: BAUMGARTL, Peter, 87746 Erkheim (DE); MÜLLER, Stefan, 87740 Buxheim (DE)
(74) Vertreter: Patentanwälte Olbricht, Buchhold, Keulertz Partnerschaft mbB
(86) Internationale Anmeldenummer: PCT/EP2022/069566
(87) Internationale Veröffentlichungsnummer: WO 2023/025455

(56) Entgegenhaltungen:
- EP-A1- 3 696 455
- CN-A- 109 099 170
- DE-A1- 102015 221 423
- US-A1- 2011 068 286

## Beschreibung

Die Erfindung betrifft ein elektromagnetisch betätigbares Ventil gemäß von Anspruch 1. Derartige Ventile werden typischerweise eingesetzt, um einen Strom von Fluiden, wie Gasen oder Flüssigkeiten, zu schalten. Hierzu dient typischerweise ein Dichtmittel, welches wahlweise gegen einen Ventilsitz gepresst wird. Typische Dichtmittel können Dichtnippel sein, welche mitunter gegenüber einem weiteren Bauteil beweglich gelagert, aufgrund Ihres elastischen Materials aber schlechte Führungseigenschaften aufweisen, was zu Leckagen oder nachteiligem Schaltverhalten führen kann. Typische Dichtmittel können auch selbst eine Vorsteuerbohrung umfassen, jedoch muss diese einen kleinen Durchmesser aufweisen, da andernfalls eine Dichtungsfunktion nicht sicher gewährleistet werden kann. Typische Dichtmittel, sofern diese selbst gegenüber einem weiteren Bauteil führend gelagert sind, weisen zudem einen hohen Verschleiß auf.

Ein Ventil gemäß dem Oberbegriff von Anspruch 1 wird zum Beispiel aus der DE 102015221423 A1 bekannt.

Es ist daher die Aufgabe der Erfindung, ein Ventil vorzuschlagen, welches die Probleme des Standes der Technik überwindet, insbesondere ein verbessertes Dichtmittel aufweist.

Hauptmerkmale der Erfindung sind in Anspruch 1 angegeben. Ausgestaltungen sind Gegenstand der Ansprüche 2 bis 10.

Erfindungsgemäß wird daher ein elektromagnetisch betätigbares Ventil vorgeschlagen, welches von einer Zentrallängsachse durchgriffen ist, umfassend einen Ventilkörper, in welchem ein Einlass und ein Auslass ausgebildet sind, einen Ventilsitz, welcher eine Hauptdüse umschließt und in einem Ventilteil strömungsmäßig zwischen dem Einlass und dem Auslass angeordnet ist, einen Anker, welcher linear entlang der Zentrallängsachse beweglich angeordnet ist, eine Spule, welche wahlweise bestrombar ist zur Erzeugung eines Magnetfelds zur Bewegung des Ankers entlang der Zentrallängsachse, eine Vorspanneinrichtung, das Ventilteil, einen Dichtkörper im Ventilteil, wobei im Dichtkörper eine Vorsteuerbohrung angeordnet ist und welcher in dem Ventilteil zur Bewegung linear entlang der Zentrallängsachse zwischen einer Schließstellung und einer Öffnungsstellung verstellbar angeordnet ist, wobei der Dichtkörper und der Anker relativ zueinander begrenzt beweglich sind, ein Vorsteuerbohrungsdichtmittel, welches mit dem Anker beweglich ist zum Verschließen der Vorsteuerbohrung in einer Anlagestellung oder Freigeben der Vorsteuerbohrung in einer Freigabestellung, wobei in der Schließstellung der Dichtkörper die Hauptdüse derart verschließt, dass nur die Vorsteuerbohrung Einlass und Auslass verbinden kann, und in der Öffnungsstellung der Dichtkörper vom Ventilsitz beabstandet ist, wobei die Vorspanneinrichtung eine Kraft auf den Anker ausübt, welche ihn in eine Ruheposition vorspannt, in welcher der Anker die Kraft auf das Vorsteuerbohrungsdichtmittel überträgt, wobei die Kraft das Vorsteuerbohrungsdichtmittel in die Anlagestellung drückt, wobei der Anker ein Mitnahmeelement aufweist, welches bei Bewegung des Ankers aus der Ruheposition in eine Zwischenposition nach Erreichen der Freigabestellung des Vorsteuerbohrungsdichtmittels mit dem Dichtkörper in Eingriff kommt, und wobei bei weiterer Bewegung des Ankers aus der Zwischenposition das Mitnahmeelement den Dichtkörper aus der Schließstellung in die Öffnungsstellung bewegt, wobei der Dichtkörper einen Grundkörper und zumindest einen Dichtring aus einem davon verschiedenen Material umfasst, wobei der Dichtring in der Schließstellung an dem Ventilsitz anliegt.

Das Ventil weist einen Ventilsitz auf, welcher eine Hauptdüse umschließt und in dem Ventilteil strömungsmäßig zwischen dem Einlass und dem Auslass angeordnet ist. Die Hauptdüse ist dabei typischerweise eine Öffnung oder ein Abschnitt innerhalb des Ventilteils, durch welchen eben nur bei geöffnetem Ventil Fluid fließen soll.

Das Ventilteil ist innerhalb des Ventilkörpers angeordnet, ein separates Teil dazu und kann gegenüber diesem abgedichtet sein. Das Ventilteil ist im Fluidpfad zwischen Einlass und Auslass angeordnet und gegenüber dem Ventilkörper unbeweglich. Das Ventilteil nimmt den Dichtkörper auf, vorzugsweise ausschließlich. Das Vorsehen eines separaten Ventilteils zum Ventilkörper, welches den Ventilsitz ausbildet, verringert die Geometriekomplexität des Ventilkörpers und senkt dessen Herstellungskosten. Zudem lässt sich dadurch ein modulares System erzeugen bei welchem der gleichbleibende Ventilkörper je nach Anforderung mit unterschiedlichen Ventilteilen kombiniert werden kann.

Das Ventil weist einen Anker auf, welcher in dem Ventilkörper zur Bewegung linear entlang einer Raumrichtung oder der Zentrallängsachse angeordnet ist. Dies bedeutet typischerweise, dass sich der Anker linear entlang einer Achse zwischen zwei vorgegebenen Endpositionen bewegen kann. Eine Raumrichtung kann dabei einer Kombination aus einer Richtung und einer dazu exakt entgegengesetzten Richtung entsprechen. Anders ausgedrückt kann der Anker eindimensional entlang der im Ventilkörper definierten Zentrallängsachse bewegt werden. Eine Bewegung quer zu dieser Raumrichtung ist dabei nicht vorgesehen, was das Vorhandensein eines gewissen technisch bedingten Spiels nicht ausschließt.

Das Ventil weist eine Spule auf, welche bei wahlweise durchfließendem elektrischem Strom ein Magnetfeld zur Bewegung des Ankers entlang der Raumrichtung oder Zentrallängsachse erzeugt. Dadurch kann der Anker aktiv bewegt werden, wobei typischerweise durch ein Umpolen Kräfte in beiden möglichen Richtungen erzeugt werden können.

Das Ventil weist einen Dichtkörper auf, welcher zumindest einen Dichtring umfasst und welcher in dem Ventilkörper zur Bewegung lediglich linear entlang der Raumrichtung oder Zentrallängsachse zwischen einer Schließstellung und einer Öffnungsstellung angeordnet ist, wobei Dichtkörper und Anker relativ zueinander beweglich sind, vorzugsweise begrenzt. Der Dichtkörper ist somit ebenfalls entlang der gleichen Raumrichtung wie der Anker bewegbar. Auch bei dem Dichtkörper ist eine Bewegung quer zur Raumrichtung oder Zentrallängsachse nicht vorgesehen. Auch hier ist ein gewisses Spiel dadurch nicht ausgeschlossen. Bevorzugt wird jedoch gerade bei dem Dichtkörper eine möglichst genau lineare Bewegung realisiert. Der Dichtkörper kann über seine Außenumfangsfläche geführt sein, vorzugsweise vom Ventilteil. Dadurch kann ein verkantungsfreies Führen gewährleistet und ein sicheres Abdichten durch den zumindest einen Dichtring erzielt werden.

In der Schließstellung verschließt der Dichtkörper mit einem Dichtring die Hauptdüse derart, dass nur die Vorsteuerbohrung im Dichtkörper Einlass und Auslass verbindet. In der Öffnungsstellung hingegen ist der Dichtkörper vom Ventilsitz beabstandet. Dadurch nimmt der Dichtkörper in der Schließstellung eine Position ein, in welcher er die Hauptdüse im Wesentlichen verschließt, wobei - wenn überhaupt - lediglich durch die Vorsteuerbohrung ein Fluid zwischen Einlass und Auslass strömen kann bzw. ein Druckausgleich stattfinden kann. In der Öffnungsstellung ist dagegen das Ventil typischerweise geöffnet, so dass ein im Rahmen der Möglichkeiten freier Druckausgleich zwischen Einlass und Auslass sowie ein entsprechender Fluidstrom stattfinden können.

Die Vorspanneinrichtung übt eine Kraft auf den Anker aus, welche ihn in eine Ruheposition vorspannt. In der Ruheposition überträgt der Anker die Kraft auf das Vorsteuerbohrungsdichtmittel, wobei diese Kraft den Dichtkörper in die Schließstellung drückt und das Vorsteuerbohrungsdichtmittel die Vorsteuerbohrung verschließt. Die Ruheposition entspricht dabei somit derjenigen Position, welche der Anker einnimmt, wenn kein durch die Spule erzeugtes Magnetfeld eine Kraft auf ihn ausübt. Die Vorspanneinrichtung sorgt dafür, dass in diesem Fall der Anker die Ruheposition einnimmt. In der Ruheposition überträgt der Anker die von der Vorspanneinrichtung vermittelte Kraft weiter auf den Dichtkörper und drückt den Dichtring dabei gegen den Ventilsitz, so dass die Hauptdüse wirkungsvoll abgedichtet wird. Wenn der Anker seine Ruheposition einnimmt, verschließt er auch die Vorsteuerbohrung, so dass letztlich kein Fluidstrom und kein Druckausgleich zwischen Einlass und Auslass mehr möglich sind, da dies durch das Vorsteuerbohrungsdichtmittel in der Anlagestellung und den Anker verhindert wird.

Der Anker weist ein Mitnahmeelement auf, welches bei Bewegung des Ankers aus der Ruheposition in eine Zwischenposition nach Öffnung der Vorsteuerbohrung mit dem Dichtkörper in Eingriff kommt. In der Zwischenposition des Ankers ist somit die Vorsteuerbohrung geöffnet, was einen Druckausgleich zwischen Einlass und Auslass, jedoch noch keinen signifikanten Volumenstrom ermöglicht. Der Druckausgleich erleichtert jedoch das anschließende Entfernen des Dichtrings vom Ventilsitz.

Bei weiterer Bewegung des Ankers aus der Zwischenposition bewegt (zieht oder drückt) das Mitnahmeelement den Dichtkörper aus der Schließstellung in die Öffnungsstellung. Dabei handelt es sich typischerweise um eine Bewegung, welche den Anker noch weiter weg von dem Ventilsitz bringt als in der Zwischenstellung. Dadurch kann der Anker den Dichtkörper aktiv bewegen und dadurch den Dichtkörper aktiv von dem Ventilsitz entfernen, was einer Öffnung des Ventils gleichkommt. Durch den bereits vorher möglichen Druckausgleich durch das Öffnen der Vorsteuerbohrung wird die Öffnung der Hauptdüse deutlich erleichtert, da erheblich geringere Druckdifferenzen zu überwinden sind.

Durch das erfindungsgemäße Ventil wird erreicht, dass der zumindest eine Dichtring als dichtendes Mittel keinen reibungsverursachten Verschleiß erfährt, da er sich selbst nicht führen muss, sondern vom Grundkörper des Dichtkörpers getragen und mit diesem Beweglich ist. Die Führungsfunktion bei der Bewegung übernimmt nun ausschließlich der Grundkörper des Dichtkörpers. Dadurch ist zudem ein verbessertes Schalt- und Dichtverhalten gegeben.

Durch das erfindungsgemäße Ventil wird zudem erreicht, dass ein großer Durchmesser der Vorsteuerbohrung möglich ist. Der Dichtring als dichtendes Mittel für die Hauptdüse selbst kann nämlich vorsteuerbohrungsfrei ausgebildet sein, während die Vorsteuerbohrungen im Grundkörper des Dichtkörpers ausgebildet sein kann. Durch die Integration der Vorsteuerbohrung in den Dichtkörper ist es möglich, den Dichtdurchmesser der Vorsteuerung kleiner auszuführen, als es der Fall wäre, wenn die Vorsteuerbohrung an einem Gegenstück angeordnet wäre.

Durch das erfindungsgemäße Ventil wird zudem erreicht, dass der Dichtring vom Dichtkörper exakt gehalten und bei seinem Kontakt mit dem Ventilsitz entsprechend exakt positioniert werden kann. Dadurch wird verhindert, dass der Dichtring aufgrund eines eventuellen Spiels von Komponenten bei aufeinanderfolgenden Schließvorgängen an unterschiedlichen Stellen mit dem Ventilsitz in Kontakt kommt. Bei dem erfindungsgemäßen Ventil kann sichergestellt werden, dass der Dichtring nicht an unterschiedlichen Stellen mit dem Ventilsitz in Kontakt kommt, wodurch unerwünschte Leckagen vermieden werden.

Gemäß einer denkbaren Ausgestaltung des erfindungsgemäßen Ventils kann der zumindest eine Dichtring stirnseitig, vorzugsweise ausschließlich stirnseitig, des Grundkörpers angeordnet sein. Dadurch sind umfangsseitiges Reibung am Dichtring vermieden und der Grundkörper kann die Stellkraft der Vorspanneinrichtung linear übertragen.

Gemäß einer denkbaren Ausgestaltung des erfindungsgemäßen Ventils kann der zumindest eine Dichtring flach bauen. Da der zumindest eine Dichtring selbst ausschließlich Dichtfunktion hat, muss er nicht für weitere Zwecke (Erfüllung einer Führungsfunktion oder Aufnahme der Vorsteuerbohrung) angepasst werden. Eine Erstreckung oder Dicke des zumindest einen Dichtrings in Richtung der Zentrallängsachse kann daher im Bereich von 1 mm bis 6 mm liegen.

Gemäß einer denkbaren Ausgestaltung des erfindungsgemäßen Ventils kann das Vorsteuerbohrungsdichtmittel ein zum Anker separates Element sein. Die beiden Elemente sind dann also zweiteilig ausgeführt. Dadurch können Herstellungskosten durch Reduktion der Geometriekomplexität gesenkt werden.

Gemäß einer denkbaren Ausgestaltung des erfindungsgemäßen Ventils kann die Vorsteuerbohrung als quer bzw. winklig, insbesondere rechtwinklig zur Hauptdüse liegende Bohrung durch den Grundkörper ausgebildet sein. Die Hauptdüse wird dabei als Öffnung definiert, welche vom Ventilsitz umgeben wird. Denkbar ist, dass die Vorsteuerbohrung und der zumindest eine Dichtring koaxial zueinander ausgerichtet sind. Bei Vorliegen von zwei Dichtringen sind vorzugsweise beide Dichtringe koaxial zur Vorsteuerbohrung ausgerichtet. Dadurch kann eine aus der Hauptdüse möglichst verwirbelungsfreie linear Durchströmung der Vorsteuerbohrung erfolgen.

Gemäß einer denkbaren Ausgestaltung des erfindungsgemäßen Ventils kann die Vorsteuerbohrung zentral bezüglich der Hauptdüse und/oder bezüglich des Dichtrings und/oder bezüglich des Grundkörpers angeordnet sein. Dadurch wird eine einfache und möglichst symmetrische Form erreicht, welche Asymmetrien vermeidet und einfach herzustellen ist.

Gemäß einer denkbaren Ausgestaltung des erfindungsgemäßen Ventils kann in dem Grundkörper und/oder dem Ventilteil umfangsseitig zumindest eine Öffnung ausgebildet sein, welche in der Zwischenstellung eine fluidische Verbindung zwischen Einlass und Hauptdüse und/oder zwischen Auslass und Hauptdüse bildet/bilden. Durch diese Öffnung(en) kann insbesondere sichergestellt werden, dass bei geöffneter Vorsteuerbohrung ein schneller Druckausgleich stattfinden kann. Damit kann die bereits erwähnte Vorsteuerfunktion vorteilhaft realisiert werden, da ein expliziter Durchlass für das zu steuernde Fluid vorgesehen ist, auch wenn noch keine Bewegung des Dichtkörpers aus der Schließstellung heraus erfolgt ist. Wenn sich der Anker wie bereits erwähnt in seiner Ruheposition befindet dichtet er jedoch die Vorsteuerbohrung ab, so dass kein Fluidstrom durch die Vorsteuerbohrung möglich ist.

Gemäß einer denkbaren Ausgestaltung des erfindungsgemäßen Ventils kann der Dichtkörper derart ausgestaltet und/oder angeordnet sein, dass der Grundkörper zumindest in Öffnungsstellung, vorzugsweise auch in Schließstellung, frei von einer Anlage oder umfangsseitigen Anlage an einem Düsenstock ist, der die Hauptdüse aufweist, oder frei von einer die Hauptdüse umgreifenden Anordnung ist. Dadurch kann nämlich das Fluid den Dichtkörper bypassen, bzw. an ihm vorbei strömen und muss ihn nicht durchströmen.

Gemäß einer denkbaren Ausgestaltung des erfindungsgemäßen Ventils kann das Ventilteil düsenstockfrei oder frei von einem Rohr sein, an welchem die Hauptdüse ausgebildet und welches von dem Dichtkörper umgreifbar ist. Die Hauptdüse ist somit nicht an einem Rohr ausgebildet, welches an einem Längsende den Ventilsitz ausbilden kann und dessen Außenumfangsfläche eine Führung anbieten kann. Die Hauptdüse kann vielmehr in einem flachen Bereich ausgebildet sein, wodurch sich eine Bauhöhe reduzieren lässt.

Gemäß einer denkbaren Ausgestaltung des erfindungsgemäßen Ventils kann der Anker oder dessen Ankergrundkörper frei von einer Dichtkante sein, welche in der Ruheposition dem Verschließen der Vorsteuerbohrung dient. Da das Vorsteuerbohrungsdichtmittel diese Funktion übernimmt, kann der Anker oder dessen Grundkörper eine einfache Geometrie aufweisen.

Gemäß einer denkbaren Ausgestaltung des erfindungsgemäßen Ventils kann der Dichtkörper oder dessen Grundkörper vorsteuerbohrungsdichtmittelseitig eine Dichtkante aufweisen. Diese Dichtkante kann beispielsweise koaxial zur Vorsteuerbohrung angeordnet sein. Sie kann so ausgebildet sein, dass sie die Vorsteuerbohrung in der Ruheposition vollständig umgibt und somit einen Fluidaustausch verhindert.

Gemäß einer denkbaren Ausgestaltung des erfindungsgemäßen Ventils kann das Mitnahmeelement als in Radialrichtung nach innen oder außen vorstehender Ankerrand ausgebildet sein und der Dichtkörper weist bevorzugt einen entsprechend vorstehenden Dichtkörperführungsrand auf, wobei der Ankerrand und der Dichtkörperführungsrand sich umgreifen. Dadurch wird eine einfache und vorteilhafte Mitnahme des Dichtkörpers durch den Anker bei einer Bewegung, welche von der Zwischenposition des Ankers aus noch weiter weg von dem Ventilsitz führt, ermöglicht. Außerdem wird eine einfache Herstellung ermöglicht, da die beiden Ränder lediglich gegeneinander verklipst werden können. In Ruheposition kann zwischen dem Ankerrand und dem Dichtkörperführungsrand ein Längsabstand ausgebildet sein.

Gemäß einer denkbaren Ausgestaltung des erfindungsgemäßen Ventils kann die Vorspanneinrichtung als Druckfeder ausgebildet sein, welche zwischen Anker und Magnetkern oder einer anderen mit dem Ventilkörper fest verbundenen Komponente des Ventils angeordnet ist. Dadurch kann in einfacher Weise eine drückende Kraft auf den Anker ausgeübt werden. Auch andere Ausführungen einer Vorspanneinrichtung sind jedoch möglich.

Gemäß einer denkbaren Ausgestaltung des erfindungsgemäßen Ventils kann in dem Ventilkörper ein Polrohr oder eine Polrohr-Baugruppe angeordnet sein, in welchem der Anker linear geführt wird. Das Polrohr kann gebildet sein aus dem Kern und einem Ankerführungsrohr, welche integral miteinander verbunden sind, beispielsweise mittels Schweißen, Rollen und/oder Kleben. Dadurch lässt sich eine einfach zu montierende Polrohr-Baugruppe ausbilden. Dies ermöglicht auch eine vorteilhafte und exakte lineare Führung des Ankers.

Gemäß einer weiteren Ausgestaltung des erfindungsgemäßen Ventils kann der Grundkörper aus einem Kunststoff gefertigt sein und der zumindest eine Dichtring aus einem elastischen Material gefertigt und in den Grundkörper integriert sein. Der Grundkörper kann insbesondere aus einem hochtemperaturbeständigen Kunststoff gefertigt sein, insbesondere aus PEEK, PPA, PPS, PA, PSU, PES, PEI. Denkbar ist das Füllen mit PTFE, um einen breiten Temperatur-Anwendungsbereich, eine universelle chemische Beständigkeit und gutes Gleit- und Antihaftverhalten zu erziehen. Der zumindest eine Dichtring kann ins besonders ein Elastomerdichtring sein oder aus Botyl, FKM, EPDM gefertigt sein.

Für die Verbindung des Grundkörpers mit dem zumindest eine Dichtring gibt es eine Vielzahl von Lösungsvorschlägen. Natürlich ist es möglich, Grundkörper und Dichtring(e) einstückig auszubilden, wobei zum Beispiel in sogenannten Koextrudier-Verfahren auch zwei unterschiedliche Materialien gleichzeitig verarbeitbar sind. Darüber hinaus ist es möglich, mit den übrigen Verbindungsverfahren, Grundkörper und Dichtring(e) zu verbinden, hierzu zählt zum Beispiel Aufkleben, Aufvulkanisieren oder auch Verschweißen.

Der zumindest eine Dichtring ist mit dem Grundkörper stoffschlüssig verbunden oder vulkanisiert.

Dadurch können Herstellungskosten einer separaten Montage von Dichtring und Grundkörper vermieden und eine dauerhafte Verbindung erreicht werden. Dadurch sind beide Teile verlier- und prozesssicher miteinander verbunden. Dadurch kann in besonders vorteilhafter Weise sichergestellt werden, dass sich der Dichtring nicht relativ zum Dichtkörper bewegt und somit möglichst exakt in immer wieder gleicher Weise mit dem Ventilsitz in Kontakt kommt.

Gemäß einer denkbaren Ausgestaltung des erfindungsgemäßen Ventils kann der zumindest eine Dichtring außenseitig in den Grundkörper integriert sein. Dadurch kann der Grundkörper klein bauen. Die Stirnseite des Grundkörpers liegt an der Außenseite.

Gemäß einer denkbaren Ausgestaltung des erfindungsgemäßen Ventils kann der zumindest eine Dichtring eine einzige Dichtfläche aufweisen, welche quer zur Zentrallängsachse verläuft.

Gemäß einer denkbaren Ausgestaltung des erfindungsgemäßen Ventils kann das Ventilteil aus einem Kunststoff gefertigt sein, wobei hier ebenso PEEK, PPA, PPS, PA, PSU, PES, PEI denkbar ist. Denkbar ist das Füllen mit PTFE, um einen breiten Temperatur-Anwendungsbereich, eine universelle chemische Beständigkeit und gutes Gleit- und Antihaftverhalten zu erziehen.

Gemäß einer weiteren Ausgestaltung des erfindungsgemäßen Ventils kann der Dichtkörper filterfrei ausgebildet sein. Dadurch kann er klein bauen. Denkbar ist, dass das Ventilteil Filter aufweist, welche in einem Fluidstrom zwischen Einlass und Auslass angeordnet sind. Damit kann ein Eindringen von Schmutz verhindert werden. Der Filter kann insbesondere als Gitternetz ausgebildet sein. Dies entspricht einer einfachen, dauerhaften und wirkungsvollen Ausführung.

Gemäß einer weiteren Ausgestaltung des erfindungsgemäßen Ventils kann der Dichtkörper außenumfangsseitig eine Führungsnut oder eine Führungsnase aufweisen und das Ventilteil innenumfangsseitig das jeweils andere Element von Führungsnut und Führungsnase aufweisen, wobei sich Führungsnut und Führungsnase parallel zur Zentrallängsachse erstrecken und Führungsnut und Führungsnase zur Ausbildung einer Führungsverbindung ineinandergreifen. Die Führungsverbindung kann insbesondere spielfrei oder spielarm ausgebildet sein oder eine schwimmende Lagerung ausbilden. Dadurch kann der Dichtkörper besonders exakt relativ zum Ventilsitz geführt werden.

Die Führung des Dichtkörpers wird über derart Führungsnut oder Führungsnase, welche einfach oder mehrfach umlaufend, vorzugsweise äquidistant, an der Außenfläche des Dichtkörpers angeordnet ist oder verteilt sind und entsprechender Partner von Führungsnut oder Führungsnase, welche(s) am Innenumfang des Ventilteils angeordnet ist/sind ausgeführt in Längsrichtung geführt. Durch die vorteilhafte Führung des Dichtkörpers soll gewährleistet werden, dass der Dichtkörper stets mit der gleichen Ringfläche auf dem Ventilsitz aufliegt. Hierdurch soll verhindert werden, dass es zu einem Versatz zwischen dem Ventilsitz und einer, durch den Ventilsitz ggf., "eingearbeiteten" Rille in dem Dichtring kommt. Solch ein Versatz könnte zu einer Leckage des Ventils führen.

Gemäß einer denkbaren Ausgestaltung des erfindungsgemäßen Ventils kann erstrecken sich Führungsnut(en) und/oder Führungsnase(n) lediglich zu einer Seite der Hauptdüse und passieren diese nicht in Richtung der Zentrallängsachse. Durch die Führungsverbindung lediglich oberhalb oder nur zu einer Seite der Hauptdüse, wird der Strömungspfad des Mediums nicht beeinträchtigt, da dieser in Öffnungsstellung nicht durch den Dichtkörper hindurchläuft, sondern diesen bypasst.

Gemäß einer denkbaren Ausgestaltung des erfindungsgemäßen Ventils kann das Ventil mehrere Führungsverbindungen aufweisen, welche äquidistant um die Zentrallängsachse herum angeordnet sind. Dadurch kann eine gleichmäßige Führung realisiert werden.

Gemäß einer weiteren Ausgestaltung des erfindungsgemäßen Ventils kann der Anker dichtkörperseitig als Vorsteuerbohrungsdichtmittel einen Dichtnippel mit ebener oder konischer Dichtfläche aufweisen. Der Anker oder dessen Ankergrundkörper weist somit ein separates Bauteil zum Dichten auf. Beide Teile können somit materialverschieden sein, was von Vorteil ist, wenn der Dichtnippel aus einem Nichtmagnetischen Material gefertigt sein soll, beispielsweise einem Elastomer. Eine ebene Dichtfläche eignet sich besonders zur Anlage an eine Dichtkante und eine konische Dichtfläche eignet sich besonders zur Anlage in eine Dichtöffnung hinein.

Gemäß einer weiteren Ausgestaltung des erfindungsgemäßen Ventils kann der Dichtnippel entweder von einem mit dem Anker fest verbundenen Dichtnippelhalter geführt oder unmittelbar mit dem Anker fest verbunden sein. Denkbar ist, dass Anker und Dichtnippel relativ unbeweglich zueinander sind, um ein bestmögliches Abdichten der Vorsteuerbohrung zu ermöglichen. Der Dichtnippelhalter kann ein im Wesentlichen zylindrischer Führungskäfig sein, welcher den Dichtnippel in Axial und/oder Radialrichtung festlegt oder verklemmt. Der Dichtnippelhalter kann mit dem Anker beispielsweise verpresst oder verschweißt sein. Der Dichtnippelhalter kann einen Anlageflansch aufweisen, mit welchem er am Anker anliegt, um die Relativposition zum Anker zu sichern. Der Dichtnippel kann jedoch auch selbst mit dem Anker beispielsweise verpresst oder verschweißt sein.

Gemäß einer weiteren Ausgestaltung des erfindungsgemäßen Ventils kann der Dichtnippel aus einem Metall oder einem elastischen Material, beispielsweise einem Elastomer oder aus Botyl, FKM, EPDM, gefertigt sein. Dadurch kann eine sicherer und fluiddichte Anlage realisiert werden. Sofern der Dichtnippel aus einem Metall gefertigt ist, sollte die ihm zugeordneten gegenüberliegende Anlagefläche ein elastisches Material aufweisen, beispielsweise ein Elastomer oder Botyl, FKM, EPDM. Denkbar ist auch, dass sowohl Dichtnippel als auch dessen Anlagefläche ein solches elastisches Material aufweisen.

Gemäß einer weiteren Ausgestaltung des erfindungsgemäßen Ventils kann der Dichtkörper einen zweiten Dichtring aufweisen, welcher dichtend mit dem Vorsteuerbohrungsdichtmittel in dessen Anlagestellung zusammenwirkt. Die beiden Dichtringe können an einander abgewandten Seiten oder Stirnseiten des Dichtkörpers angeordnet sein. Dadurch können die elastischen Elemente in den Dichtkörper verlagert werden, was zu einer Herstellungsvereinfachung führen kann.

Gemäß einer weiteren Ausgestaltung des erfindungsgemäßen Ventils können die beiden Dichtringe einstückig ausgebildet sein. Die beiden Dichtringe können somit materialeinheitlich vorhanden sein. Dies ist beispielweise dadurch möglich, dass der Grundkörper des Dichtkörpers einen ihn durchdringenden Kanal aufweist, der die beiden Dichtringe verbindet. Die Dichtringe können beispielsweise mittels Spritzguss oder Vulkanisation mit dem Dichtkörper in einfacher Weise hergestellt werden.

Gemäß einer weiteren Ausgestaltung des erfindungsgemäßen Ventils kann der Dichtkörper ankerseitig ein Stellwegbegrenzungsmittel aufweisen, welches einen Stellweg des Vorsteuerbohrungsdichtmittels begrenzt. Gerade bei Vorsehen eines Dichtnippels mit konischer Dichtfläche, welche mitunter in die Vorsteuerbohrung eindringt, kann das Stellwegbegrenzungsmittel eine Eindringtiefe begrenzen und die zugeordnete Anlagefläche vor zu großen Kräften schützen.

Denkbar ist, dass in Ruheposition das Vorsteuerbohrungsdichtmittel mit dem Stellwegbegrenzungsmittel ein Hohlraum ausbildet oder begrenzt, welcher als Aufnahmeraum für verdrängtes Material eines Dichtrings dient.

Gemäß einer denkbaren Ausgestaltung des erfindungsgemäßen Ventils kann der Grundkörper des Dichtkörpers einen Scheibenabschnitt und davon in Längsrichtung abragende Ringsegmente aufweisen. Zwischen benachbarten Ringsegmenten können Durchbrechungen angeordnet sein, die dem Fluidfluss dienen. Denkbar ist, dass zumindest eines der Ringsegmente eine der genannten Öffnungen aufweist. Denkbar ist, dass zumindest eines der Ringsegmente außenumfangsseitig eine Führungsnut oder eine Führungsnase aufweist. Denkbar ist, dass der Dichtkörperführungsrand an den Ringsegmenten mit Öffnung angeordnet ist, da dadurch aufwändig herstellbare Hinterschnitte vermieden werden. Beispielsweise kann bei einer mehrteiligen Spritzgussform für den Grundkörper ein Formteil in Radialrichtung beweglich zur Ausbildung einer Öffnung vorgesehen sein, das den Dichtkörperführungsrand mit ausbilden und nach Fertigstellung in Radialrichtung aus dem Grundkörper gezogen werden kann.

Gemäß einer denkbaren Ausgestaltung des erfindungsgemäßen Ventils kann es einen Linearmagneten umfassen. Der Linearmagnet dient der Verstellung des Ankers 30. Der Linearmagnet kann zumindest den Anker, die Spule, den Magnetkern, die Vorspanneinrichtung und das Ankerführungsrohr umfassen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Längsschnittansicht durch ein erfindungsgemäßes Ventil erster Ausführung in einem ersten Zustand,
- Fig. 2: einen Ausschnitt gemäß Fig. 1 in einem zweiten Zustand,
- Fig. 3: einen Ausschnitt gemäß Fig. 1 in einem dritten Zustand,
- Fig. 4: eine perspektivische Ansicht eines Dichtkörpers erster Ausführung,
- Fig. 5: eine Längsschnittansicht eines Ventilteils erster Ausführung
- Fig. 6: eine Längsschnittansicht durch ein erfindungsgemäßes Ventil zweiter Ausführung in einem ersten Zustand und

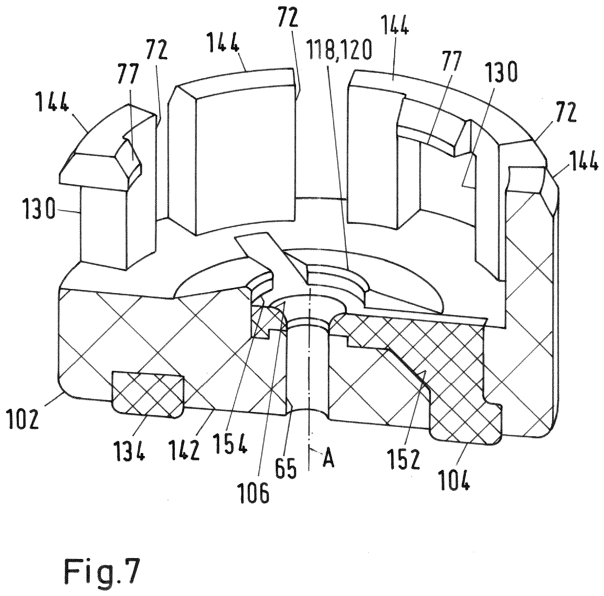

- Fig. 7: eine Längsschnittansicht eines Dichtkörpers zweiter Ausführung.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Ausgehen von einer Zentrallängsachse A erstreckt sich eine Radialrichtung R, um die Zentrallängsachse A herum erstreckt sich eine Umfangsrichtung U und eine Quermittelebene Q ist derart angeordnet, dass deren Normalenvektor auf der Zentrallängsachse A liegt.

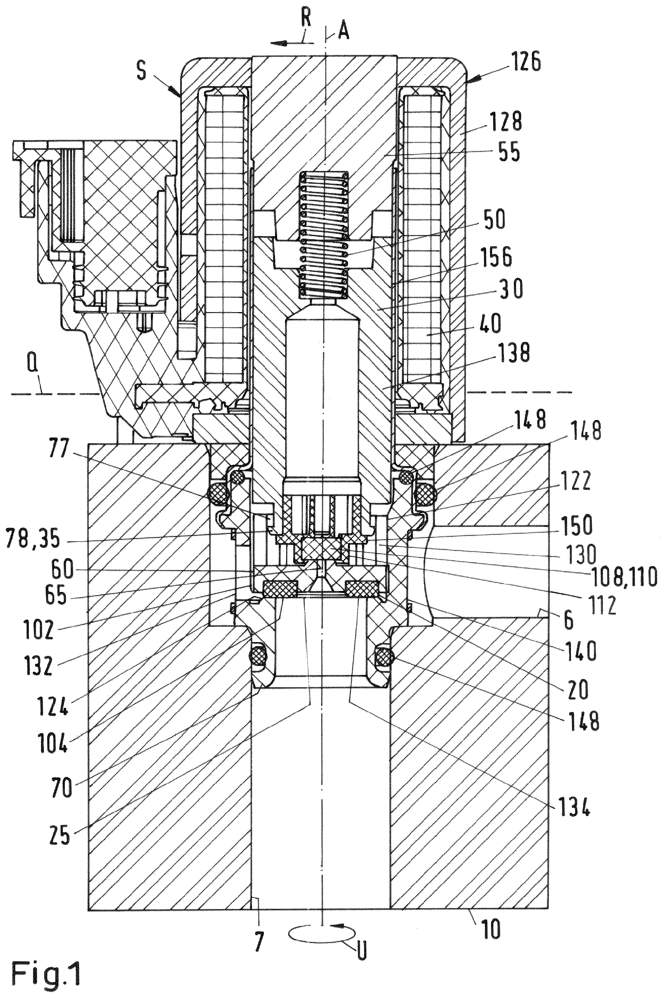

Fig. 1 zeigt ein elektromagnetisch betätigbares Ventil 5 gemäß einem ersten Ausführungsbeispiel der Erfindung in einem ersten Zustand (Schließstellung). Das Ventil 5 weist einen Ventilkörper 10 auf. In dem Ventilkörper 10 sind ein Einlass 6 und ein Auslass 7 ausgebildet. Durch den Einlass 6 kann ein zu steuerndes Fluid, beispielsweise Wasserstoff, einströmen. Bei geöffnetem Ventil 5 soll dieses Fluid durch den Auslass 7 wieder austreten, wobei es bei geschlossenem Ventil 5 nicht durch den Auslass 7 austreten soll. Der Ventilkörper 10 umfasst ein Ventilteil 70, welches im Fluidstrom zwischen Einlass 6 und Auslass 7 angeordnet und mittels Dichtungen 148 gegenüber dem Ventilkörper 10 abgedichtet ist.

Innerhalb des Ventilteils 70 und von diesem ist ein Ventilsitz 20 ausgebildet. Dieser Ventilsitz 20 umschließt eine Hauptdüse 25. Ventilsitz 20 und Hauptdüse 25 sind durch eine Dichtkante 124 definiert, welche innerhalb des Ventilteils 70 ausgebildet ist.

In der Bildebene oberhalb des Ventilsitzes 20 ist ein Linearmagnet 126 mit einem Gehäuse 128 angeordnet, umfassend einen Anker 30. Der Anker 30 ist linear entlang der Zentrallängsachse A beweglich in einem Ankerführungsrohr 156 gelagert.

Der Linearmagnet 126 weist zudem eine Spule 40 auf, welche den Anker 30 zumindest teilweise umgibt und dazu ausgebildet ist, ein Magnetfeld zu erzeugen, mittels welchem der Anker 30 entlang seiner Raumrichtung oder der Zentrallängsachse A bewegbar ist. In der Bildebene oberhalb des Ankers 30 ist ferner eine Vorspanneinrichtung 50 in Form einer Druckfeder angeordnet, welche sich einends am Anker 30 abstützt und den Anker 30 in der Bildebene nach unten in Richtung Ventilsitz 20 drückt. Die Vorspanneinrichtung 50 stützt sich dabei anderenends an einem Magnetkern 55 ab, welcher fest mit dem Gehäuse 128 verbunden ist, welches fest mit dem Ventilkörper 10 verbunden ist. Der Magnetkern 55 ist zudem zur Ausbildung einer Polrohr-Baugruppe integral mit dem Ankerführungsrohr 156 verbunden.

Zwischen Ventilsitz 20 und Anker 30 ist ein Dichtkörper 60 im Ventilteil 70 angeordnet. Der Dichtkörper 60 umfasst einen Grundkörper 102 und einen Dichtring 104, welcher in den Grundkörper 102 integriert ist. Mittig in dem Grundkörper 102 ist eine Vorsteuerbohrung 65 angeordnet, welche entlang der Zentrallängsachse A vertikal durch den Dichtkörper 60 hindurchragt.

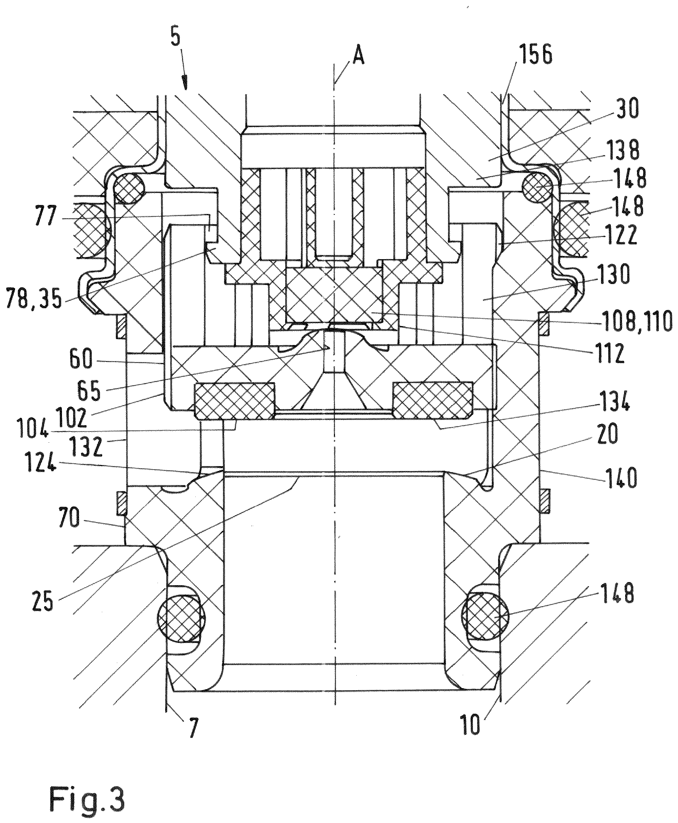

Der Dichtkörper 60 ist in dem Ventilteil 70 zur Bewegung linear entlang der Zentrallängsachse A zwischen einer Schließstellung (Fig. 1) und einer Öffnungsstellung (Fig. 3) verstellbar aufgenommen. Der Dichtkörper 60 liegt dabei innenseitig an dem Ventilteil 70 an und wird von diesem entlang der bereits mit Bezug auf den Anker 30 erwähnten Raumrichtung geführt, d.h. der Dichtkörper 60 kann sich nur linear entlang dieser Raumrichtung bewegen. Hierzu ist der Dichtkörper 60 spielfrei in dem Ventilteil 70 geführt.

Durch die eben beschriebene Ausführung wird sichergestellt, dass der Dichtkörper 60 sich mit Bezug auf den Ventilsitz 20 lediglich linear entlang der Raumrichtung bewegen kann. Dadurch wird insbesondere auch sichergestellt, dass der Dichtkörper 60 immer wieder an der gleichen Stelle mit dem Ventilsitz 20 in Eingriff kommt.

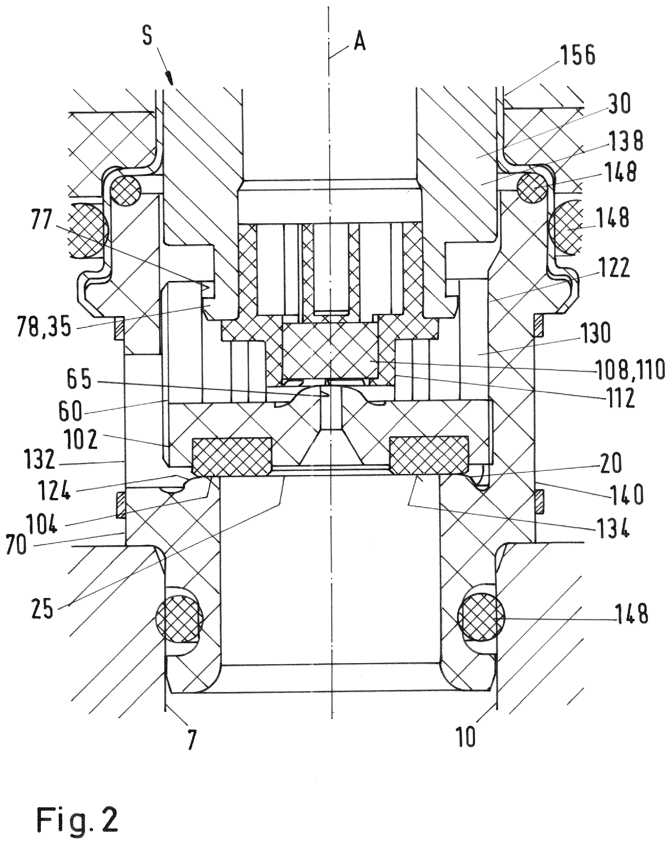

In Fig. 1 ist der Anker 30 in seiner Ruheposition dargestellt und der Dichtkörper 60 nimmt eine Schließstellung ein. Der Anker 30 weist ein mit ihm bewegliches Vorsteuerbohrungsdichtmittel 108 in Form eines Dichtnippel 110 mit ebener Dichtfläche 134 auf, welches zum Verschließen der Vorsteuerbohrung 65 in einer Anlagestellung (Fig. 1) oder Freigeben der Vorsteuerbohrung 65 in einer Freigabestellung (Fig. 2) dient, wobei in der Schließstellung der Dichtkörper 60 die Hauptdüse 25 derart verschließt, dass nur die Vorsteuerbohrung 65 Einlass 6 und Auslass 7 verbinden kann, und in der Öffnungsstellung der Dichtkörper 60 vom Ventilsitz 20 beabstandet ist. Der Dichtnippel 110 ist in einem mit dem Kern 30 fest verbundenen Dichtnippelhalter 112 festgelegt. Ohne das Anliegen dieses Vorsteuerbohrungsdichtmittels 108 wäre in dem dargestellten Zustand der Fig. 1 ein Fluidfluss zwischen Einlass 6 und Auslass 7 nur durch die Vorsteuerbohrung 65 möglich. Aufgrund des Anliegens des Vorsteuerbohrungsdichtmittels 108 ist auch dieser Fluidfluss nicht mehr möglich, so dass das Ventil 5 in dem dargestellten Zustand der Fig. 1 vollständig verschlossen ist.

Der Anker 30 weist ein Mitnahmeelement 35 auf, welches als vorstehender Ankerrand 78 ausgebildet ist. Komplementär hierzu weist der Dichtkörper 60 einen umlaufenden Dichtkörperführungsrand 77 auf. In Schließstellung und Ruheposition ist dazwischen in Richtung der Zentrallängsachse ein Längsabstand ausgebildet.

Die Funktionalität des Ventils 5 wird nunmehr mit Bezug auf die Fig. 1 bis 3 beschrieben, wobei die Fig. 2 und 3 jeweils einen Ausschnitt aus dem in Fig. 1 dargestellten Ventil 5 zeigen.

In dem Zustand von Fig. 1, liegt wie bereits erwähnt, das Vorsteuerbohrungsdichtmittel 108 des Ankers 30 an dem Dichtkörper 60 derart an, dass die Vorsteuerbohrung 65 verschlossen wird. Da gleichzeitig der Dichtkörper 60 den Ventilsitz 20 bzw. die Hauptdüse 25 verschließt, ist das Ventil 5 geschlossen und es liegt kein Fluidstrom zwischen Einlass 6 und Auslass 7 an.

Das Mitnaheelement 35 und der Dichtkörperführungsrand 77 sind vertikal voneinander beabstandet. Zwischen Anker 30 und Dichtkörper 60 kann dabei auch ein radiales Spiel vorgesehen sein, welches die Fertigung vereinfacht und den Betrieb des Ventils 5 nicht stört.

Fig. 2 zeigt einen Zustand, in welchem der Anker 30 aufgrund eines anliegenden Magnetfelds etwas in der Bildebene nach oben bzw. in Richtung Magnetkern 55 bewegt wurde, und zwar bis zu einer Zwischenposition des Ankers 30. Dabei liegen die beiden vorstehenden Ränder 77, 78 aneinander an, ohne, dass sich jedoch der Dichtkörper 60 bereits bewegt hätte. Aufgrund des nach oben verschobenen Ankers 30 wird die Vorsteuerbohrung 65 geöffnet, da sich das Vorsteuerbohrungsdichtmittel 108 von dem Dichtkörper 60 entfernt hat und die Vorsteuerbohrung 65 öffnet. Dies ermöglicht einen Druckausgleich zwischen Einlass 6 und Auslass 7, wodurch ein nachfolgendes Entfernen des Dichtkörpers 60 und dessen Dichtring 104 von dem Ventilsitz 20 deutlich erleichtert wird.

Der Dichtkörper 60 weist umfangsseitig eine Anzahl von Öffnungen 130 auf, welche in der Zwischenstellung eine fluidische Verbindung zwischen Einlass 6 und Hauptdüse 25 bilden. Auch das Ventilteil 70 weist umfangsseitig eine Anzahl von Öffnungen 132 auf, welche in der Zwischenstellung eine fluidische Verbindung zwischen Einlass 6 und Hauptdüse 25 bilden.

In Fig. 3 wurde der Anker 30 in der Bildebene bzw. in Richtung Magnetkern 55 noch weiter als bei der in Fig. 2 dargestellten Zwischenposition von dem Ventilsitz 20 wegbewegt und befindet sich nunmehr in einer oberen Endposition. Es ist eine Öffnungsstellung erreicht. Dabei wurde aufgrund des Eingriffs zwischen den beiden vorstehenden Rändern 77, 78 der Dichtkörper 60 in gleiche Raumrichtung mit nach oben gezogen. Dadurch wurde der Dichtkörper 60 und dessen Dichtring 104 von dem Ventilsitz 20 entfernt. Gleichzeitig befinden sich nunmehr der gesamte Dichtkörper 60 in einer zur Hauptdüse 25 distanzierten Position, dass der Fluidstrom den Dichtkörper bypasst und eine fluidische Verbindung vom Einlass 6 zur Hauptdüse 25 und dann zum Auslass 7 ermöglicht, jedoch unter Aussparung des Dichtkörpers 60. Dadurch wird der Strömungsquerschnitt deutlich erhöht, was einen vorteilhaften großvolumigen Fluidaustausch ermöglicht.

Wird von dem in Fig. 3 dargestellten Zustand aus beispielsweise ein in der Spule 40 fließender Strom abgeschaltet, so drückt die Vorspanneinrichtung 50 den Anker 30 in der Bildebene nach unten bzw. in Richtung Ventilsitz 20, welcher somit auch wieder mit dem Dichtkörper 60 in Eingriff kommt und diesen in gleiche Richtung und dessen Dichtring 104 auf den Ventilsitz 20 drückt. Somit wird das Ventil 5 wieder verschlossen und es wird wieder der in Fig. 1 dargestellte Zustand (Schließstellung) eingenommen.

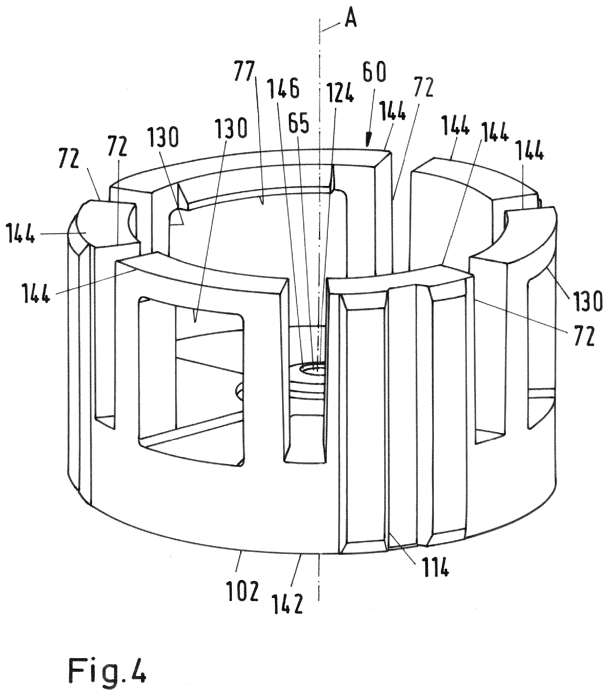

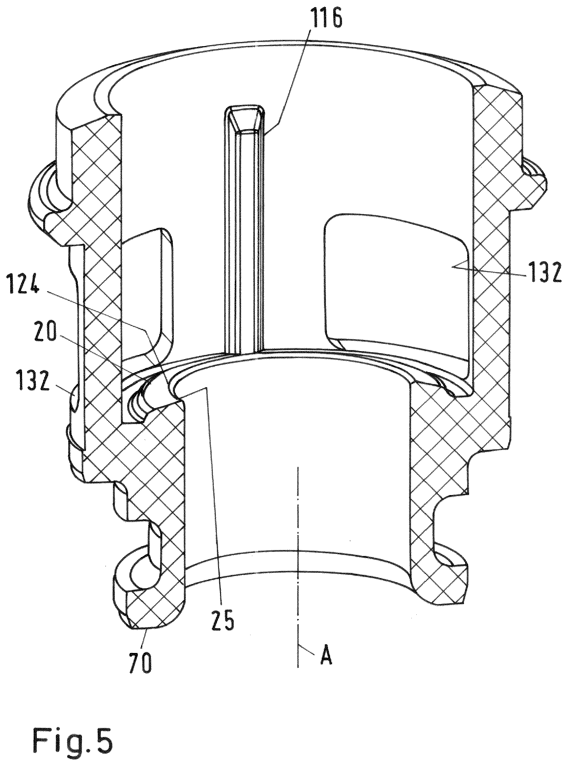

Nachstehend sollen einzelne Aspekte des Ventils 5 detaillierter beschrieben werden, insbesondere angesichts der Fig. 4 und 5.

Der Dichtring 104 ist ausschließlich stirnseitig des Grundkörpers 102 angeordnet und in diesen integriert. Der Dichtring 104 baut flach und weist eine Erstreckung in Richtung der Zentrallängsachse A im Bereich von 1 mm bis 6 mm auf. Das Vorsteuerbohrungsdichtmittel 108 ist ein zum Anker 30 separates Element. Die Vorsteuerbohrung 65 ist als quer bzw. winklig, zur Hauptdüse 25 liegende Bohrung durch den Grundkörper 102 ausgebildet. Die Vorsteuerbohrung 65 ist zentral bezüglich der Hauptdüse 25 und bezüglich des Dichtrings 104 und bezüglich des Grundkörpers 102 angeordnet. Bei Zusammenschau der Fig. 1 bis 3 wird insbesondere deutlich, dass der Dichtkörper 60 derart ausgestaltet und/oder angeordnet ist, dass dessen Grundkörper 102 in Öffnungsstellung (Fig. 3) und auch in Schließstellung (Fig. 1), frei von einer Anlage oder umfangsseitigen Anlage an einem Düsenstock ist, der die Hauptdüse aufweist, oder frei von einer die Hauptdüse 25 umgreifenden Anordnung ist. Die Hauptdüse 25 ist nicht an einem Rohr oder einem Düsenstock angeordnet, sondern vielmehr in einem flachen Bereich ausgebildet. Da der Anker das separate Vorsteuerbohrungsdichtmittel 108 umfasst, ist dessen Ankergrundkörper 138 frei von einer Dichtkante, welche in der Ruheposition dem Verschließen der Vorsteuerbohrung 25 dient. Fig. 4 zeigt, dass der Dichtkörper 60 oder dessen Grundkörper 102 vorsteuerbohrungsdichtmittelseitig eine Dichtkante 146 aufweist. Diese Dichtkante 146 kann beispielsweise koaxial zur Vorsteuerbohrung 65 angeordnet sein. Sie kann so ausgebildet sein, dass sie die Vorsteuerbohrung 65 in der Ruheposition vollständig umgibt und somit einen Fluidaustausch verhindert. Der Grundkörper 102 und der Dichtring 104 sind materialverschieden. Der Grundkörper 102 ist als Kunststoffteil, insbesondere als Kunststoffspritzteil ausgebildet ist und der Dichtring 104 ist als aufvulkanisiertes Elastomerteil ausgebildet. Der Dichtring 104 ist außenseitig an dessen Stirnseite in den Grundkörper 102 integriert. Der Dichtring 104 weist eine einzige Dichtfläche 134 auf, welche quer zur Zentrallängsachse A verläuft. Der Dichtkörper 60 ist filterfrei ausgebildet, umfasst also kein Filterelement. Eine Filterfunktion wird vom Ventilteil 70 ausgeführt. Das Ventilteil 70 weist einen Filter 140 auf, welcher in dem Fluidstrom zwischen Einlass 6 und Auslass 7 angeordnet ist. Der Filter 140 überdeckt die Öffnungen 132.

Die Fig. 4 und 5 zeigen Teile einer Führungsverbindung 122. Der Dichtkörper 60 weist außenumfangsseitig eine oder mehrere Führungsnuten 114 auf und das Ventilteil 70 weist innenumfangsseitig entsprechend viele Führungsnasen 116 auf. Führungsnut 114 und Führungsnase 116 erstrecken sich parallel zur Zentrallängsachse A und Führungsnut 114 und Führungsnase 116 greifen zur Ausbildung einer Führungsverbindung 122 ineinander. Die Führungsverbindung 122 kann insbesondere spielfrei oder spielarm ausgebildet sein oder eine schwimmende Lagerung ausbilden. Ersichtlich ist, dass sich die Führungsnut(en) 114 und Führungsnase(n) 116 lediglich zu einer Seite der Hauptdüse 25 erstrecken und diese nicht in Richtung der Zentrallängsachse A passieren. Der Dichtkörper 60 ist daher lediglich bis an die Hauptdüse 25 heranstellbar, jedoch nicht darüber hinaus, beispielsweise mittels umgreifen der Hauptdüse 25. Der Dichtnippelhalter 112 weist einen Anlageflansch 150 auf, mit welchem er am Anker 30 anliegt, um die Relativposition zum Anker 30 zu sichern.

Der Grundkörper 102 des Dichtkörpers 60 weist einen Scheibenabschnitt 142 auf, der zentral von der Zentrallängsachse A durchgriffen ist. Davon ragen in Längsrichtung Ringsegmente 144 ab. Die Längsrichtung verläuft entlang der Zentrallängsachse A. Zwischen benachbarten Ringsegmenten 144 sind Durchbrechungen 72 angeordnet, die dem Fluidstrom dienen. Zudem weist jedes zweite Ringsegment 144 eine der Öffnungen 130 auf. Diese Durchbrechungen 72 und Öffnungen 130 ermöglichen einen Fluidstrom von dem Einlass 6 zur Vorsteuerbohrung 65 in der Zwischenstellung auch dann, wenn sich der Dichtkörper 60 in der Schließstellung befindet. Dies ermöglicht eine besonders vorteilhafte Implementierung der oben bereits erwähnten Vorsteuerfunktion, da durch die Durchbrechungen 72 und Öffnungen 130 explizit ein Durchlass für das Fluid vorgesehen ist. Solange die Dichtfläche 134 an dem Dichtkörper 60 anliegt kann jedoch typischerweise trotzdem kein Fluid durch die Vorsteuerbohrung 65 strömen.

Zumindest eines der Ringsegmente 144 weist außenumfangsseitig eine Führungsnut 114 auf, wobei vorzugsweise ein Ringsegment 144 entweder eine Öffnung 130 oder eine Führungsnut 114 oder eine Führungsnase 116 aufweist. Zumindest eines der Ringsegmente 144 weist innenumfangsseitig den Dichtkörperführungsrand 77 auf, wobei vorzugsweise dasjenige Ringsegment 144 einen Dichtkörperführungsrand 77 aufweist, welches eine Öffnung 130 aufweist. Der Dichtkörperführungsrand 77 ist an der der Dichtkante 146 gegenüberliegenden Seite der entsprechenden Öffnung 130 angeordnet.

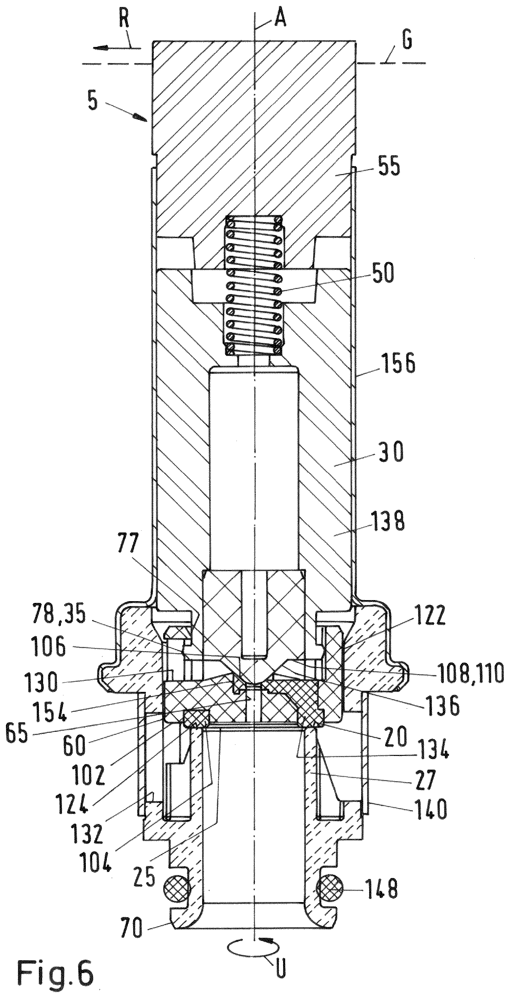

Fig. 6 zeigt ein Ventil 5 einer zweiten Ausführung, wobei nun lediglich die Unterschiede zu der ersten Ausführung (Fig. 1 bis 5) beschrieben werden sollen. Gehäuse 10 und 128 sind nicht dargestellt. Der Dichtnippel 110 ist nunmehr unter Verzicht auf einen zwischengeschalteten Dichtnippelhalter unmittelbar mit dem Anker 30 fest verbunden. Der Dichtnippel 110 weist zudem anstelle einer ebenen Dichtfläche eine konische Dichtfläche 136 auf. Der Dichtkörper 60 weist einen zweiten Dichtring 106 auf, welcher dichtend mit dem Vorsteuerbohrungsdichtmittel 108 in dessen Anlagestellung zusammenwirkt. Die beiden Dichtringe 104, 106 sind an einander abgewandten Seiten des Dichtkörpers 60 oder dessen Grundkörper 102 angeordnet. Die beiden Dichtringe 104, 106 sind einstückig ausgebildet. Dies ist dadurch möglich, dass der Grundkörper 102 einen ihn durchdringenden Kanal 152 aufweist, der die beiden Dichtringe 104, 106 verbindet. An dem zweiten Dichtring 106 kommt in Ruheposition, die in Fig. 6 gezeigt ist, die konische Dichtfläche 136 des Vorsteuerbohrungsdichtmittels 108 zur dichten Anlage. Der Dichtkörper 60 oder dessen Grundkörper 102 weist ankerseitig ein Stellwegbegrenzungsmittel 118 in Form eines Rundkragens 120 auf, welches einen Stellweg des Vorsteuerbohrungsdichtmittels 108 begrenzt. Dort kommt nämlich die konische Dichtfläche 136 zur Anlage. In Ruheposition bildet sich zwischen Vorsteuerbohrungsdichtmittel 108 und Stellwegbegrenzungsmittel 118 ein Hohlraum 154 aus, welcher als Aufnahmeraum für verdrängtes Material des zweiten Dichtrings 106 dient.

Die Hauptdüse 25 ist abweichend von den Fig. 1 bis 5 nun in oder an einem von dem Ventilteil 70 ausgebildeten Rohr 27 ausgebildet, welches an einem Längsende den Ventilsitz 20 ausbildet.

### Bezugszeichenliste

| | | | |
|---|---|---|---|
| 5 | Ventil | 130 | Öffnung |
| 6 | Einlass | 132 | Öffnung |
| 7 | Auslass | 134 | ebene Dichtfläche |
| 10 | Ventilkörper | 136 | konische Dichtfläche |
| 20 | Ventilsitz | 138 | Ankergrundkörper |
| 25 | Hauptdüse | 140 | Filter |
| 27 | Rohr | 142 | Scheibenabschnitt |
| 30 | Anker | 144 | Ringsegment |
| 35 | Mitnahmeelement | 146 | Dichtkante |
| 40 | Spule | 148 | Dichtung |
| 50 | Vorspanneinrichtung | 150 | Anlageflansch |
| 55 | Magnetkern | 152 | Kanal |
| 60 | Dichtkörper | 154 | Hohlraum |
| 65 | Vorsteuerbohrung | 156 | Ankerführungsrohr |
| 70 | Ventilteil | | |
| 72 | Durchbrechung | A | Zentrallängsachse |
| 77 | Dichtkörperführungsrand | R | Radialrichtung |
| 78 | Ankerrand | U | Umfangsrichtung |
| 102 | Grundkörper | Q | Quermittelebene |
| 104 | Dichtring | | |
| 106 | Dichtring | | |
| 108 | Vorsteuerbohrungsdichtmittel | | |
| 110 | Dichtnippel | | |
| 112 | Dichtnippelhalter | | |
| 114 | Führungsnut | | |
| 116 | Führungsnase | | |
| 118 | Stellwegbegrenzungsmittel | | |
| 120 | Rundkragen | | |
| 122 | Führungsverbindung | | |
| 124 | Dichtkante | | |
| 126 | Linearmagnet | | |
| 128 | Gehäuse | | |

## Patentansprüche

1. Elektromagnetisch betätigbares Ventil, welches von einer Zentrallängsachse (A) durchgriffen ist, umfassend
- einen Ventilkörper (10), in welchem ein Einlass (6) und ein Auslass (7) ausgebildet sind,
- einen Ventilsitz (20), welcher eine Hauptdüse (25) umschließt und in einem Ventilteil (70) strömungsmäßig zwischen dem Einlass (6) und dem Auslass (7) angeordnet ist,
- einen Anker (30), welcher linear entlang der Zentrallängsachse (A) beweglich angeordnet ist,
- eine Spule (40), welche wahlweise bestrombar ist zur Erzeugung eines Magnetfelds zur Bewegung des Ankers (30) entlang der Zentrallängsachse (A),
- eine Vorspanneinrichtung (50),
- das Ventilteil (70),
- einen Dichtkörper (60) im Ventilteil (70), wobei im Dichtkörper (60) eine Vorsteuerbohrung (65) angeordnet ist und welcher in dem Ventilteil (70) zur Bewegung linear entlang der Zentrallängsachse (A) zwischen einer Schließstellung und einer Öffnungsstellung verstellbar angeordnet ist, wobei der Dichtkörper (60) und der Anker (30) relativ zueinander begrenzt beweglich sind,
- ein Vorsteuerbohrungsdichtmittel (108), welches mit dem Anker (30) beweglich ist zum Verschließen der Vorsteuerbohrung (65) in einer Anlagestellung oder Freigeben der Vorsteuerbohrung (65) in einer Freigabestellung,
- wobei in der Schließstellung der Dichtkörper (60) die Hauptdüse (25) derart verschließt, dass nur die Vorsteuerbohrung (65) Einlass (6) und Auslass (7) verbinden kann, und in der Öffnungsstellung der Dichtkörper (60) vom Ventilsitz (20) beabstandet ist,
- wobei die Vorspanneinrichtung (50) eine Kraft auf den Anker (30) ausübt, welche ihn in eine Ruheposition vorspannt, in welcher der Anker (30) die Kraft auf das Vorsteuerbohrungsdichtmittel (108) überträgt, wobei die Kraft das Vorsteuerbohrungsdichtmittel (108) in die Anlagestellung drückt,
- wobei der Anker (30) ein Mitnahmeelement (35) aufweist, welches bei Bewegung des Ankers (30) aus der Ruheposition in eine Zwischenposition nach Erreichen der Freigabestellung des Vorsteuerbohrungsdichtmittels (108) mit dem Dichtkörper (60) in Eingriff kommt, und
- wobei bei weiterer Bewegung des Ankers (30) aus der Zwischenposition das Mitnahmeelement (35) den Dichtkörper (60) aus der Schließstellung in die Öffnungsstellung bewegt, wobei
- der Dichtkörper (60) einen Grundkörper (102) und zumindest einen Dichtring (104, 106) aus einem davon verschiedenen Material umfasst, wobei der Dichtring (104) in der Schließstellung an dem Ventilsitz (20) anliegt,
**dadurch gekennzeichnet, dass**
- der zumindest eine Dichtring (104, 106) mit dem Grundkörper (102) stoffschlüssig verbunden oder vulkanisiert ist.

2. Elektromagnetisch betätigbares Ventil nach Anspruch 1, **dadurch gekennzeichnet, dass** der Grundkörper (102) aus einem Kunststoff gefertigt ist und der zumindest eine Dichtring (104, 106) aus einem elastischen Material gefertigt und in den Grundkörper (102) integriert ist.

3. Elektromagnetisch betätigbares Ventil nach einem der voranstehenden Ansprüche,
**dadurch gekennzeichnet, dass** der Dichtkörper (60) filterfrei ausgebildet ist.

4. Elektromagnetisch betätigbares Ventil nach einem der voranstehenden Ansprüche,
**dadurch gekennzeichnet, dass** der Dichtkörper (60) außenumfangsseitig eine Führungsnut (114) oder eine Führungsnase (116) aufweist und das Ventilteil (70) innenumfangsseitig das jeweils andere Element von Führungsnut (114) und Führungsnase (116) aufweist, wobei sich Führungsnut (114) und Führungsnase (116) parallel zur Zentrallängsachse (A) erstrecken und Führungsnut (114) und Führungsnase (116) zur Ausbildung einer Führungsverbindung (122) ineinander greifen.

5. Elektromagnetisch betätigbares Ventil nach einem der voranstehenden Ansprüche,
**dadurch gekennzeichnet, dass** der Anker (30) dichtkörperseitig als Vorsteuerbohrungsdichtmittel (108) einen Dichtnippel (110) mit ebener oder konischer Dichtfläche (134, 136) aufweist.

6. Elektromagnetisch betätigbares Ventil nach einem der voranstehenden Ansprüche,
**dadurch gekennzeichnet, dass** der Dichtnippel (110) entweder von einem mit dem Anker (30) fest verbundenen Dichtnippelhalter (112) geführt oder unmittelbar mit dem Anker (30) fest verbunden ist.

7. Elektromagnetisch betätigbares Ventil nach einem der voranstehenden Ansprüche,
**dadurch gekennzeichnet, dass** der Dichtnippel (110) aus einem Metall oder einem elastischen Material gefertigt ist.

8. Elektromagnetisch betätigbares Ventil nach einem der voranstehenden Ansprüche,
**dadurch gekennzeichnet, dass** der Dichtkörper (60) einen zweiten Dichtring (106) aufweist, welcher dichtend mit dem Vorsteuerbohrungsdichtmittel (108) in dessen Anlagestellung zusammenwirkt.

9. Elektromagnetisch betätigbares Ventil nach einem der voranstehenden Ansprüche,
**dadurch gekennzeichnet, dass** die beiden Dichtringe (104, 106) einstückig ausgebildet sind.

10. Elektromagnetisch betätigbares Ventil nach einem der voranstehenden Ansprüche,
**dadurch gekennzeichnet, dass** der Dichtkörper (60) ankerseitig ein Stellwegbegrenzungsmittel (118) aufweist, welches einen Stellweg des Vorsteuerbohrungsdichtmittels (108) begrenzt.

## Claims

1. Electromagnetically actuatable valve, which is penetrated by a central longitudinal axis (A), comprising
- a valve body (10) in which an inlet (6) and an outlet (7) are configured,
- a valve seat (20) which encloses a main nozzle (25) and is arranged in a valve part (70) in terms of flow between the inlet (6) and the outlet (7),
- an armature (30) which is arranged so as to be movable in a linear manner along the central longitudinal axis (A),
- a coil (40) which can be selectively energized for generating a magnetic field for moving the armature (30) along the central longitudinal axis (A),
- a pretensioning device (50),
- the valve part (70),
- a sealing body (60) in the valve part (70), wherein a pilot bore (65) is arranged in the sealing body (60) and is arranged in the valve part (70) for moving in a linear manner along the central longitudinal axis (A) so as to be adjustable between a closed position and an open position, wherein the sealing body (60) and the armature (30) are movable in a defined manner relative to one another,
- a pilot bore sealing means (108) which is movable with the armature (30) for closing the pilot bore (65) in a bearing position or releasing the pilot bore (65) in a released position,
- wherein in the closed position the sealing body (60) closes the main nozzle (25) such that only the pilot bore (65) can connect the inlet (6) and outlet (7) and in the open position the sealing body (60) is spaced apart from the valve seat (20),
- wherein the pretensioning device (50) exerts a force on the armature (30) which pretensions it into a resting position in which the armature (30) transfers the force to the pilot bore sealing means (108), wherein the force pushes the pilot bore sealing means (108) into the bearing position,
- wherein the armature (30) has a driver element (35) which comes into engagement with the sealing body (60) when the armature (30) is moved out of the resting position into an intermediate position after the released position of the pilot bore sealing means (108) is reached, and
- wherein with further movement of the armature (30) from the intermediate position the driver element (35) moves the sealing body (60) from the closed position into the open position, wherein
- the sealing body (60) comprises a main body (102) and at least one sealing ring (104, 106) made of a material which is different therefrom, wherein the sealing ring (104) bears against the valve seat (20) in the closed position,
**characterized in that**
- the at least one sealing ring (104, 106) is connected or vulcanized to the main body (102) by a material connection.

2. Electromagnetically actuatable valve according to Claim 1, **characterized in that** the main body (102) is manufactured from a plastics material and the at least one sealing ring (104, 106) is manufactured from a resilient material and integrated in the main body (102).

3. Electromagnetically actuatable valve according to one of the preceding claims, **characterized in that** the sealing body (60) is configured without a filter.

4. Electromagnetically actuatable valve according to one of the preceding claims, **characterized in that** the sealing body (60) has a guide groove (114) or a guide lug (116) on the outer periphery and the valve part (70) has the respective other element of the guide groove (114) and guide lug (116) on the inner periphery, wherein the guide groove (114) and guide lug (116) extend parallel to the central longitudinal axis (A) and the guide groove (114) and guide lug (116) interlock to form a guide connection (122).

5. Electromagnetically actuatable valve according to one of the preceding claims, **characterized in that** the armature (30) has on the sealing body side a sealing nipple (110) with a planar or conical sealing surface (134, 136) as pilot bore sealing means (108).

6. Electromagnetically actuatable valve according to one of the preceding claims, **characterized in that** the sealing nipple (110) is guided either by a sealing nipple holder (112) fixedly connected to the armature (30) or is fixedly connected directly to the armature (30).

7. Electromagnetically actuatable valve according to one of the preceding claims, **characterized in that** the sealing nipple (110) is manufactured from a metal or a resilient material.

8. Electromagnetically actuatable valve according to one of the preceding claims, **characterized in that** the sealing body (60) has a second sealing ring (106) which cooperates sealingly with the pilot bore sealing means (108) in the bearing position thereof.

9. Electromagnetically actuatable valve according to one of the preceding claims, **characterized in that** the two sealing rings (104, 106) are configured in one piece.

10. Electromagnetically actuatable valve according to one of the preceding claims, **characterized in that** the sealing body (60) has on the armature side an adjusting path defining means (118) which defines an adjusting path of the pilot bore sealing means (108).

## Revendications

1. Soupape à actionnement électromagnétique, qui est traversée par un axe longitudinal central (A), comprenant
- un corps de soupape (10), dans lequel sont formées une entrée (6) et une sortie (7),
- un siège de soupape (20), qui entoure une buse principale (25) et qui est disposé dans une partie de soupape (70) en termes d'écoulement entre l'entrée (6) et la sortie (7),
- un induit (30), qui est disposé de manière à être mobile linéairement le long de l'axe longitudinal médian (A),
- une bobine (40), qui peut au choix être alimentée en courant pour générer un champ magnétique permettant de déplacer l'induit (30) le long de l'axe longitudinal central (A),
- un dispositif de précontrainte (50),
- la partie de soupape (70),
- un corps d'étanchéité (60) dans la partie de soupape (70), un alésage pilote (65) étant disposé dans le corps d'étanchéité (60) et ledit corps d'étanchéité étant disposé dans la partie de soupape (70) de manière à pouvoir être ajusté linéairement le long de l'axe longitudinal médian (A) entre une position fermée et une position ouverte, le corps d'étanchéité (60) et l'induit (30) étant mobiles l'un par rapport à l'autre de manière limitée,
- un moyen d'étanchéité (108) d'alésage pilote, qui est mobile avec l'induit (30) pour fermer l'alésage pilote (65) dans une position d'appui ou pour dégager l'alésage pilote (65) dans une position de dégagement,
- le corps d'étanchéité (60) fermant dans la position fermée la buse principale (25) de telle manière que seul l'alésage pilote (65) peut relier l'entrée (6) et la sortie (7) et le corps d'étanchéité (60) étant espacé du siège de soupape (20) dans la position ouverte,
- le dispositif de précontrainte (50) exerçant une force sur l'induit (30), qui le précontraint dans une position de repos, dans laquelle l'induit (30) transmet la force au moyen d'étanchéité (108) d'alésage pilote, la force pressant le moyen d'étanchéité (108) d'alésage pilote dans la position d'appui,
- l'induit (30) comportant un élément d'entraînement (35) qui, lorsque l'induit (30) est déplacé de la position de repos dans une position intermédiaire, vient en prise avec le corps d'étanchéité (60) après que la position de dégagement du moyen d'étanchéité (108) d'alésage pilote a été atteinte, et
- l'élément d'entraînement (35) déplaçant le corps d'étanchéité (60) hors de la position fermée dans la position ouverte lors du déplacement ultérieur de l'induit (30) hors de la position intermédiaire,
- le corps d'étanchéité (60) comprenant un corps de base (102) et au moins une bague d'étanchéité (104, 106) composée d'un matériau différent de celui-ci, la bague d'étanchéité (104) reposant sur le siège de soupape (20) dans la position fermée,
**caractérisée en ce que**
- l'au moins une bague d'étanchéité (104, 106) est reliée ou vulcanisée par liaison de matière au corps de base (102).

2. Soupape à actionnement électromagnétique selon la revendication 1, **caractérisée en ce que** le corps de base (102) est fabriqué à partir d'une matière plastique et l'au moins une bague d'étanchéité (104, 106) est fabriquée à partir d'un matériau élastique et est intégrée dans le corps de base (102).

3. Soupape à actionnement électromagnétique selon l'une des revendications précédentes, **caractérisée en ce que** le corps d'étanchéité (60) est formé sans filtre.

4. Soupape à actionnement électromagnétique selon l'une des revendications précédentes, **caractérisée en ce que** le corps d'étanchéité (60) comporte du côté périphérique extérieur une rainure de guidage (114) ou un ergot de guidage (116) et la partie de soupape (70) comporte du côté périphérique intérieur l'autre élément respectivement parmi la rainure de guidage (114) et l'ergot de guidage (116), la rainure de guidage (114) et l'ergot de guidage (116) s'étendant parallèlement à l'axe longitudinal central (A) et la rainure de guidage (114) et l'ergot de guidage (116) s'engrenant l'un dans l'autre pour former une liaison de guidage (122).

5. Soupape à actionnement électromagnétique selon l'une des revendications précédentes, **caractérisée en ce que** l'induit (30) comporte, du côté du corps d'étanchéité, comme moyen d'étanchéité (108) d'alésage pilote, un embout d'étanchéité (110) avec une surface d'étanchéité plane ou conique (134, 136).

6. Soupape à actionnement électromagnétique selon l'une des revendications précédentes, **caractérisée en ce que** l'embout d'étanchéité (110) soit est guidé par un support (112) d'embout d'étanchéité relié fixement à l'induit (30), soit est relié directement fixement à l'induit (30).

7. Soupape à actionnement électromagnétique selon l'une des revendications précédentes, **caractérisée en ce que** l'embout d'étanchéité (110) est fabriqué à partir d'un métal ou d'un matériau élastique.

8. Soupape à actionnement électromagnétique selon l'une des revendications précédentes, **caractérisée en ce que** le corps d'étanchéité (60) comporte une deuxième bague d'étanchéité (106), qui coopère de manière étanche avec le moyen d'étanchéité (108) d'alésage pilote dans sa position d'appui.

9. Soupape à actionnement électromagnétique selon l'une des revendications précédentes, **caractérisée en ce que** les deux bagues d'étanchéité (104, 106) sont formées d'une seule pièce.

10. Soupape à actionnement électromagnétique selon l'une des revendications précédentes, **caractérisée en ce que** le corps d'étanchéité (60) comporte, du côté de l'induit, un moyen de limitation de course (118), qui limite une course du moyen d'étanchéité (108) d'alésage pilote.
